# NEUE EUROPÄISCHE PATENTSCHRIFT

(11) **EP 2 525 944 B2**
(45) Veröffentlichungstag und Bekanntmachung des Hinweises auf die Entscheidung über den Einspruch: **27.12.2023**
(45) Hinweis auf die Patenterteilung: 02.12.2020
(21) Anmeldenummer: 11700997.7
(22) Anmeldetag: 13.01.2011
(51) Int. Cl.: B25B 5/08, B62D 65/18

(54) **VERRIEGELUNGSVORRICHTUNG ZUM BEFESTIGEN EINES GEGENSTANDES AN EINER TRAGSTRUKTUR UND SKID MIT EINER SOLCHEN VORRICHTUNG**
CLAMP FOR HOLDING A WORK PART ON A SUPPORT AND SKID USING SUCH A CLAMP
PILOTE DE SERRAGE D'UNE PIÈCE SUR UN SUPPORT ET TRAINEAU PORTE- CARROSSERIE UTILISANT UN TEL PILOTE

(30) Priorität: 21.01.2010 DE 102010005337
(43) Veröffentlichungstag der Anmeldung: 28.11.2012
(73) Patentinhaber: Eisenmann GmbH, 71032 Böblingen (DE)
(72) Erfinder: ROBBIN, Jörg, 72119 Pfäffingen (DE)
(74) Vertreter: Ostertag & Partner Patentanwälte mbB
(86) Internationale Anmeldenummer: PCT/EP2011/000116
(87) Internationale Veröffentlichungsnummer: WO 2011/088967

(56) Entgegenhaltungen:
- EP-A2- 1 241 085
- EP-A2- 1 586 498
- WO-A1-03/041913
- DE-T2- 69 903 316
- DE-U1-202006 011 130
- DE-U1-202007 012 041
- JP-A- H03 256 641
- JP-A- 2000 218 457
- JP-A- 2000 246 569
- JP-A- 2002 307 256
- JP-A- 2003 145 362
- JP-A- 2003 145 363
- JP-A- 2003 159 617
- JP-A- 2006 272 492
- US-A1- 2005 017 424
- US-A1- 2007 075 472
- US-B2- 7 584 946

## Beschreibung

Die Erfindung betrifft eine Vorrichtung zum lösbaren Befestigen einer Fahrzeugkarosserie an einer Tragstruktur, insbesondere einem Skid, mit
a) einem Befestigungselement, welches zwischen einer Freigabestellung und einer Arretierstellung bewegbar ist, wobei das Befestigungselement exzentrisch an einem Ende einer Welle getragen ist,
b) einem Konterelement;
   wobei
c) die Fahrzeugkarosserie über ein dieser zugeordnetes Haltebauteil zwischen dem Befestigungselement in der Arretierstellung und dem Konterelement arretierbar ist.

Außerdem betrifft die Erfindung einen Skid zum Transportieren von Fahrzeugkarosserien.

Ein solcher Skid mit einer Vorrichtung der eingangs genannten Art ist in der DE 20 2007 012 041 U1 beschrieben. Derartige Skids werden insbesondere in der Automobilindustrie zum Transport von Fahrzeugkarosserien zwischen und teilweise auch in einzelnen Bearbeitungs- oder Behandlungsstationen innerhalb einer Förderanlage verwendet. Dabei arbeiten in der Regel Auflagekufen des Skids mit Fördermitteln, wie beispielsweise einem Kettenförderer, einem Bandförderer oder einem Rollenbahnförderer, zusammen.

Eine Arretierung der Fahrzeugkarosserie an dem Skid ist vor allem dann erforderlich, wenn die auf dem Skid transportierte Fahrzeugkarosserie während des Transports auch in Richtungen gefördert oder bewegt wird, die außerhalb einer Horizontalen liegen, oder gegenüber einer Horizontalen geneigte Stellungen einnehmen kann. Hierzu zählen insbesondere auch Überkopffahrten der Fahrzeugkarosserie.

Zu behandelnde Fahrzeugkarosserien werden hierzu mittels Befestigungsvorrichtungen der eingangs genannten Art an dem Skid befestigt und wieder von diesem abgenommen, wenn die Behandlung der Fahrzeugkarosserie abgeschlossen ist.

Befestigungsvorrichtungen der eingangs genannten Art sind beispielsweise aus der DE 20 2006 011 130 U1 bekannt. Dort wird das Befestigungselement jeweils mit Hilfe eines Schraubendrehers, der von Hand oder auch maschinell geführt werden kann, zwischen seiner Arretierstellung und seiner Freigabestellung bewegt. Dort verbleibt auch nach der Befestigung ein geringes Spiel zwischen Fahrzeugkarosserie und Befestigungselement.

Wenn die Fahrzeugkarosserie elektrisch kontaktiert werden muss, z.B. um diese in einer elektrophoretischen Tauchlackieranlage mit Lack zu beschichten, dient die Befestigungsvorrichtung in der Regel zugleich als Kontakteinrichtung, um die Fahrzeugkarosserie mit elektrischer Spannung zu beaufschlagen. Durch das erwähnte Spiel zwischen den Komponenten kann es hierbei jedoch zu unerwünschten Abbränden kommen.

Aufgabe der Erfindung ist es daher, eine Befestigungsvorrichtung der eingangs genannten Art zu schaffen, welche den obigen Gedanken Rechnung trägt.

Diese Aufgabe wird bei einer Befestigungsvorrichtung der eingangs genannten Art dadurch gelöst, dass
d) das Befestigungselement in der Arretierstellung auf das Konterelement zu und von diesem weg bewegbar ist;
e) das Befestigungselement in der Arretierstellung mittels einer Vorspanneinrichtung unter Vorspannung gegen das Haltebauteil der Fahrzeugkarosserie in Richtung auf das Konterelement drückbar ist;
f) die Welle radial außen ein Betätigungselement trägt, welches mit einem Federelement der Vorspanneinrichtung zusammenarbeitet.

Erfindungsgemäß bleibt also eine Beweglichkeit des Befestigungselements in Richtung auf das Konterelement zu und von diesem weg erhalten, auch wenn das Befestigungselement seine Arretierstellung einnimmt. Die sichere Befestigung der Fahrzeugkarosserie wird dabei durch die Vorspanneinrichtung gewährleistet, durch welche das Befestigungselement in Andruck an das Haltebauteil der Fahrzeugkarosserie gehalten wird.

Vorhandene Fertigungstoleranzen werden auf diese Weise ausgeglichen. Es verbleibt unter normalen Umständen kein Spielraum mehr zwischen dem Befestigungselement und der Fahrzeugkarosserie, wodurch der gegebenenfalls erforderliche elektrische Kontakt der Komponenten stets sichergestellt ist.

Es ist dabei vorteilhaft, wenn die auf das Befestigungselement in der Arretierstellung wirkende Vorspannung einstellbar ist.

Auf Grund von Fertigungstoleranzen sowohl bei der Befestigungseinrichtung als auch bei verschiedenen zu befestigenden Fahrzeugkarosserien kann es günstig sein, wenn das Befestigungselement derart geführt ist, dass es bei einer Bewegung von der Freigabestellung in die Arretierstellung in Richtung auf das Konterelement zu und bei einer Bewegung zwischen der Arretierstellung und der Freigabestellung in Richtung von dem Konterelement weg bewegt wird.

Der notwendige Bewegungsweg des Befestigungselements kann dabei von Fahrzeugkarosserie zu Fahrzeugkarosserie unterschiedlich lang sein. Durch die Vorspannung des Befestigungselements kann der Arretiervorgang automatisiert erfolgen, da keine individuelle Anpassung an eine Fahrzeugkarosserie erfolgen muss. Das Befestigungselement wird schlicht bei jedem Arretiervorgang "über das Ziel hinaus" in Richtung auf das Konterelement zu bewegt. Sobald der Kontakt zwischen dem Befestigungselement und der Fahrzeugkarosserie vorhanden ist, wird eine weitere Bewegung des Befestigungselements jedoch durch die verbleibende Beweglichkeit in Verbindung mit der Vorspannung unterbunden.

Ohne die Vorspannung des Befestigungselements gegen das Konterelement müsste das Befestigungselement dagegen jeweils möglichst exakt so lange in Richtung auf das Konterelement zu bewegt werden, bis das Haltebauteil der Fahrzeugkarosserie zwischen dem Befestigungselement und dem Konterelement eingeklemmt ist.

Dadurch, dass der Arretiervorgang ohne Vorspannung in dieser Weise individuell an jede Fahrzeugkarosserie angepasst erfolgen müsste, müsste die Förderung der Fahrzeugkarosserie beim Anbringen oder Abnehmen derselben an einen oder von einem Skid unterbrochen werden, damit der Skid mit den Befestigungsvorrichtungen stillstünde. Dies senkt jedoch den möglichen Durchsatz einer Behandlungs- oder Bearbeitungsanlage gegenüber einer kontinuierlichen Förderung. Zudem ist die manuelle Anpassung an unterschiedliche Fahrzeugkarosserien gegenüber einem automatisierten Prozess verhältnismäßig zeitaufwendig.

Dadurch, dass das Befestigungselement exzentrisch an einem Ende einer Welle getragen ist, führt ein Verdrehen der Welle zu einer Bewegung des Befestigungselements senkrecht zur Wellenachse.

Vorzugsweise ist das Federelement ein Federblech.

Es ist insbesondere günstig, wenn das Federelement wenigstens einen Führungsabschnitt und einen Druckabschnitt umfasst, so dass das Betätigungselement durch eine Bewegung über den Führungsabschnitt zum Druckabschnitt führbar ist, gegen welchen es anliegt, wenn das Befestigungselement die Arretierstellung einnimmt. Auf diese Weise kann die Vorspannung sukzessive aufgebaut werden.

Das Betätigungselement der Welle kann zusätzlich genutzt werden, wenn es außerdem mit einem Führungselement einer Freigabeeinrichtung zusammenarbeitet.

Dabei ist es in Anlehnung an das Federblech der Arretiereinrichtung günstig, wenn das Führungselement eine Führungsplatte ist. Diese muss keine elastischen Eigenschaften haben.

Es ist von Vorteil, wenn das Führungselement wenigstens einen Führungsabschnitt und einen Halteabschnitt umfasst, so dass das Betätigungselement durch eine Bewegung über den Führungsabschnitt zum Halteabschnitt führbar ist, gegen welchen es anliegt, wenn das Befestigungselement die Freigabestellung einnimmt. Bei diesem Aufbau kann eine geführte Bewegung des Befestigungselements in Längsrichtung der Welle erzwungen werden.

Um ein automatisiertes Verdrehen der Wellen zu ermöglichen, ist es günstig, wenn diese an ihrem zweiten Ende eine Mitnehmereinheit trägt, durch welche sie mechanisch mittels eines Umstellelements verdrehbar ist. Vorzugweise ist dies ein Drehstern, der mit längs des Verfahrweges des Skids vorgesehenen Umstellbolzen zusammenarbeitet.

Die oben genannte Aufgabe wird bei einem Skid der eingangs genannten Art dadurch gelöst, dass er eine Befestigungseinrichtung nach einem der Ansprüche 1 bis 11 umfasst.

Die Vorteile entsprechen denjenigen Vorteilen, die oben zur Befestigungseinrichtung erläutert wurden.

Ein Ausführungsbeispiel der Erfindung wird nachstehend anhand der Zeichnungen näher erläutert. In diesen zeigen:
- Figur 1: eine perspektivische Ansicht einer Befestigungsvorrichtung aus einer ersten Blickrichtung;
- Figur 2: eine perspektivische Ansicht der Befestigungsvorrichtung aus einer zweiten Blickrichtung;
- Figur 3: eine Draufsicht auf die Befestigungsvorrichtung;
- Figur 4: einen Schnitt der Befestigungsvorrichtung entlang der Schnittlinie IV-IV in Figur 3;
- Figur 5: ein Ende eines Federblechs einer Vorspanneinrichtung in vergrößertem Maßstab;
- Figur 6: ein Ende einer Führungsplatte einer Freigabeeinrichtung;
- Figur 7: einen Schnitt der Befestigungsvorrichtung entlang der Schnittlinie VII-VII in Figur 3;
- Figur 8: einen Schnitt der Befestigungsvorrichtung entlang der Schnittlinie VIII-VIII in Figur 3;
- Figur 9: eine perspektivische Ansicht der Befestigungsvorrichtung aus einer dritten Blickrichtung.

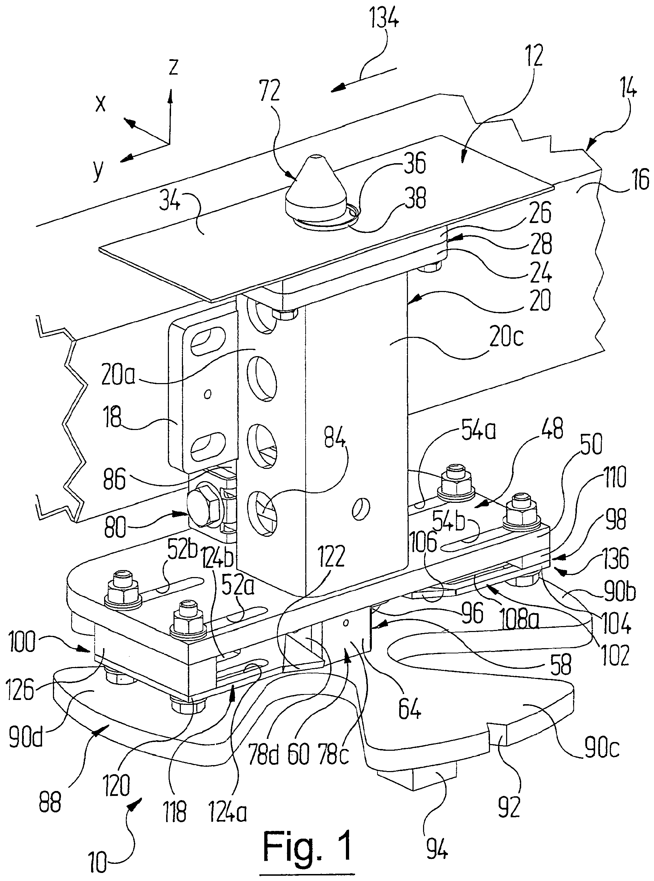

In Figur 1 ist mit 10 insgesamt eine Befestigungsvorrichtung gekennzeichnet, mit deren Hilfe eine nur in den Figuren schematisch und nur teilweise angedeutete Fahrzeugkarosserie 12 lösbar an einem Skid 14 befestigt werden kann, von dem seinerseits nur in Figur 1 lediglich ein Rahmenabschnitt 16 zu erkennen ist. Ein Skid, wie er zum Fördern von Fahrzeugkarosserien genutzt wird, ist bekannt, weshalb auf eine nähere Erläuterung hierzu verzichtet werden kann.

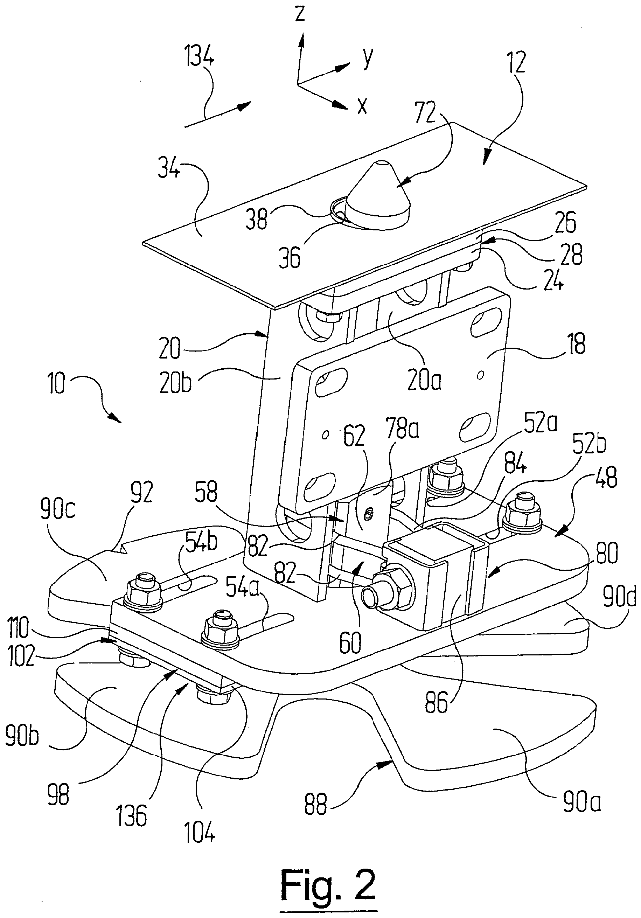

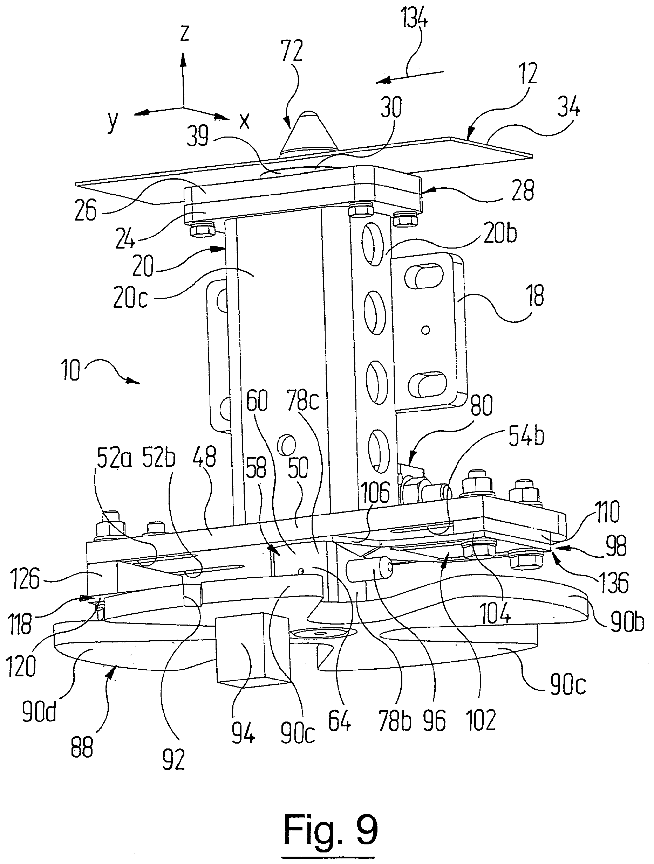

Ein in den Figuren 1 bis 4 und 9 gezeigtes Bezugs-Koordinatensystem sei fest mit der Befestigungseinrichtung 10 verankert, so dass es sich mit der Befestigungseinrichtung 10 im Raum mitbewegt. Bezogen auf das Koordinatensystem bedeuten die nachstehend verwendeten Richtungsangaben rechts die positive x-Richtung, vorne die positive y-Richtung und oben die positive z-Richtung. Die Richtungsangaben links, hinten und unten geben somit die jeweils entgegengesetzte Richtung an.

Die Befestigungsvorrichtung 10 umfasst eine Flanschplatte 18, mittels der sie an den Rahmenabschnitt 16 des Skids 14 angeschraubt werden kann, wobei entsprechende Schrauben in Figur 1 nicht dargestellt sind.

Die Flanschplatte 18 trägt ein im Querschnitt U-förmiges Gehäuseprofil 20 mit zwei in einer xz-Ebene verlaufenden gegenüberliegenden Seitenwänden 20a, 20b und einer senkrecht zu diesen und damit in einer yz-Ebene verlaufenden Längswand 20c. Die offene Seite des Gehäuseprofils 20 weist nach rechts zur Flanschplatte 18.

An einer ersten, oberen Stirnseite 22 trägt das Gehäuseprofil 20 eine erste Kontaktplatte 24, welche in einer xy-Ebene verläuft. Die Kontaktplatte 24 kann beispielsweise mit dem Gehäuseprofil 20 verschweißt sein.

Auf der von dem Gehäuseprofil 20 abliegenden Seite der ersten Kontaktplatte 24 ist eine zu dieser parallele zweite Kontaktplatte 26 angeordnet, welche mit der ersten Kontaktplatte 24 verschraubt ist. Die erste und die zweite Kontaktplatte 24, 26 sind Teil eines Kontaktelements 28. Über dieses kann die Fahrzeugkarosserie 12 elektrisch kontaktiert werden, um die Fahrzeugkarosserie 12 z.B. in einer elektrophoretischen Tauchlackieranlage mit Lack zu beschichten.

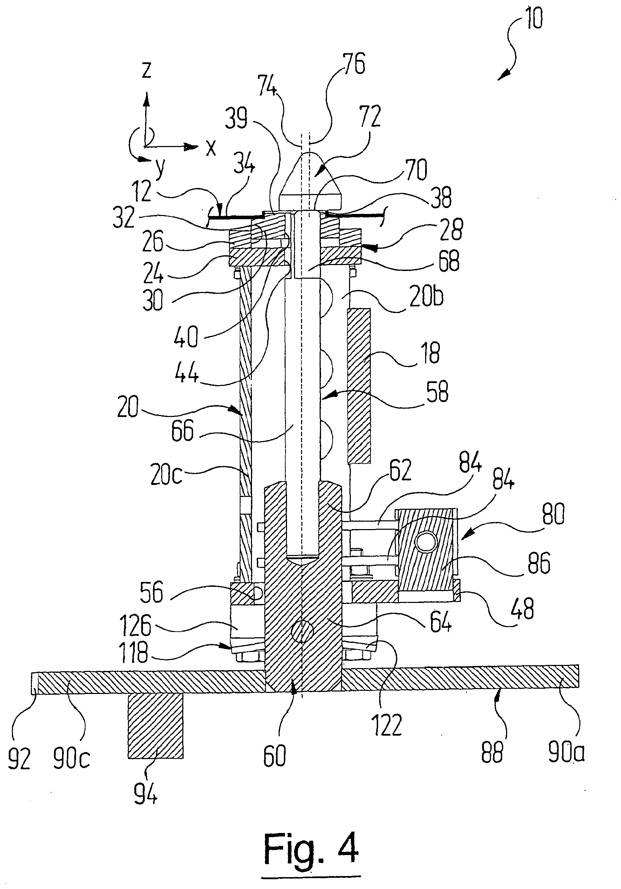

Wie insbesondere in Figur 4 zu erkennen ist, umfasst das Kontaktelement 28 außerdem ein Passteil 30, welches in einen im Querschnitt kreisrunden Durchgang 32 der außen liegenden zweiten-Kontaktplatte 26 eingeschweißt ist. Die Oberflächenkontur des Passteils 30 auf dessen von dem Gehäuseprofil 20 abliegenden Oberseite ist komplementär zu dem Verlauf eines Koppelblechs 34 der zu befestigenden Fahrzeugkarosserie 12, das insbesondere einen kreisrunden Durchgang 36 mit einem am Rand des Durchgangs 36 nach oben ragenden umlaufenden Kragen 38 aufweist, in den das Passteil 30 passgenau mit einem entsprechenden Vorsprung 39 eingreifen kann.

Außerdem weist das Passteil 30 einen im Querschnitt kreisrunden Durchgang 40 auf, dessen Längsachse 42 gegenüber der Längsachse des Durchgangs 36 der Fahrzeugkarosserie 12 versetzt ist, wenn deren Koppelblech 34 an dem Passteil 30 anliegt, wie es in Figur 4 gezeigt ist.

Die erste Koppelplatte 24 weist koaxial zu dem Durchgang 40 in dem Passelement 30 einen Durchgang 44 auf, wobei beide Durchgänge 40, 44 auch den gleichen Querschnitt haben.

Auf der dem Kontaktelement 28 gegenüberliegenden zweiten, unteren Stirnseite 46 des Gehäuseprofils 20 ist eine Lagerplatte 48 angeschweißt, welche parallel zu den Kontaktplatten 24 und 26 verläuft. Die Lagerplatte 48 schließt mit einem linken Außenrand 50 in etwa mit der Außenfläche der Längswand 20c des Gehäuseprofils 20 ab, erstreckt sich ansonsten jedoch nach rechts sowie vorne und hinten über das Gehäuseprofil 20 hinaus.

In den Bereichen neben den Seitenwänden 20a, 20b des Gehäuseprofils 20 weist die Lagerplatte 48 jeweils zwei parallel zueinander und senkrecht zu den Seitenwänden 20a, 20b des Gehäuseprofils 20 verlaufende Langlöcher 52a, 52b bzw. 54a, 54b auf.

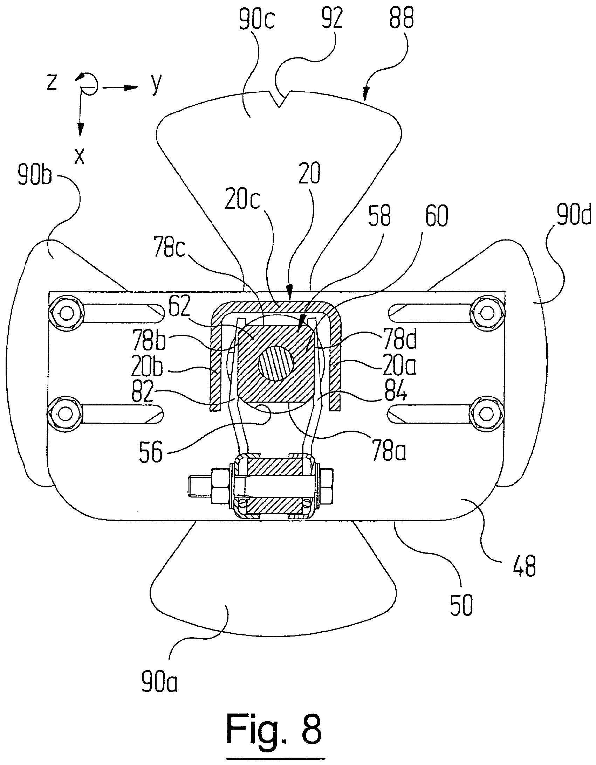

Die Seitenwände 20a, 20b und die Längswand 20c des Gehäuseprofils 20 umgeben einen im Querschnitt kreisrunden Durchgang 56 der Lagerplatte 48, dessen Durchmesser in etwa dem Innendurchmesser des Gehäuseprofils 20 entspricht, wie in den Figuren 4 und 8 zu erkennen ist.

Die Befestigungsvorrichtung 10 umfasst außerdem eine Welle 58, die sich in z-Richtung erstreckt und durch die Durchgänge 40, 44 des Koppelements 28 sowie den Durchgang 56 der Lagerplatte 48 hindurch nach außen ragt.

Die Welle 58 umfasst einen als Vierkant ausgebildeten Drehblock 60, der seinerseits einen Halteabschnitt 62, der im Inneren des Gehäuseprofils 20 angeordnet ist, und einen Antriebsabschnitt 64 umfasst, der durch die Lagerplatte 48 hindurch nach außen ragt. Der Drehblock 60 berührt mit seinen Längsrändern die Innenmantelfläche des Durchgangs 56 der Lagerplatte 48. Durch den im Wesentlichen quadratischen Querschnitt des Drehblocks 60 der Welle 58 kann ein Verkleben der Welle 58 in der Lagerplatte 48 durch z.B. Beschichtungsmedien weitgehend vermieden werden.

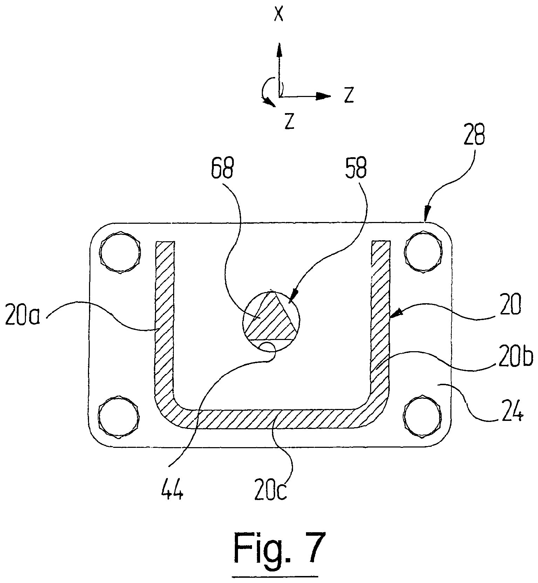

Mit dem freien oberen Ende des Halteabschnitts 62 des Drehblocks 60 ist ein mittlerer Wellenabschnitt 66 mit kreisrundem Querschnitt verbunden. Dieser geht an seinem vom Drehblock 60 abliegenden oberen Ende in einen Koppelabschnitt 68 der Welle 58 über. Der Koppelabschnitt 68 ist als Dreikant mit weitgehend dreieckigem Querschnitt (siehe auch Figur 7) ausgebildet, dessen lichte Außenkontur mit derjenigen des mittleren Wellenabschnitts 66 übereinstimmt. Der Koppelabschnitt 68 der Welle 58 erstreckt sich durch die Durchgänge 40, 44 des Kontaktelements 28 hindurch, welche einen Durchmesser haben, der demjenigen des mittleren Wellenabschnitts 66 entspricht.

Wie bei dem Drehblock 60 der Welle 58 kann durch den dreieckigen Querschnitt des Koppelabschnitts 68 der Welle 58 deren Verkleben in den Durchgängen 40, 44 des Kontaktelements 28 durch z.B. Beschichtungsmedien weitgehend vermieden werden.

An dem oberen Ende 70 ihres Koppelabschnitts 68 trägt die Welle 58 als eigentliches Befestigungselement einen Klemmkonus 72, der sich in Längsrichtung von der Welle 58 weg verjüngt und dessen größter Durchmesser an den Durchmesser des Vorsprungs 39 des Passteils 30 und damit auch des Durchgangs 36 in der Fahrzeugkarosserie 12 angepasst ist, so dass er durch die entsprechenden Durchgänge weitgehend passgenau hindurchtreten kann.

Der Drehblock 60, der mittlere Wellenabschnitt 66 und der Koppelabschnitt 68 der Welle 58 sind koaxial zueinander angeordnet und geben die Längs- bzw. Drehachse 74 der Welle 58 vor. Der Klemmkonus 72 ist jedoch derart an der Welle 58 angebracht, dass seine Längsachse 76 gegenüber der Drehachse 74 der Welle 58 exzentrisch und in Richtung auf eine der Längsflächen des Drehblocks 60 der Welle 58 versetzt angeordnet ist. Diese Längsfläche des Drehblocks 60 trägt das Bezugszeichen 78a und ist in Figur 4 rechts zu erkennen, wo sie in x-Richtung nach rechts zur Flanschplatte 18 weist. Die drei weiteren Längsflächen des Drehblocks 60 der Welle 58 sind aus Richtung des Klemmkonus 72 nach unten betrachtet ausgehend von der Längsfläche 78a im Uhrzeigersinn mit den Bezugszeichen 78b, 78c und 78d gekennzeichnet (siehe z.B. Figur 8).

Der Halteabschnitt 62 des Drehblocks 60 der Welle 58 arbeitet mit einer Rückhalteeinrichtung 80 zusammen, durch welche die Welle 58 gegen ein unbeabsichtigtes Verdrehen gesichert ist. Hierzu umfasst die Rückhalteeinrichtung 80 zwei Paare von Federstegen 82 bzw. 84, wobei die Federstege jedes Paares 82, 84 in z-Richtung der Welle 58 übereinander angeordnet sind und an zwei gegenüberliegenden Seiten an den Halteabschnitt 62 des Drehblocks 60 der Welle 58 anliegen.

Die Federstegpaare 82, 84 sind an einem Halteblock 86 auf der Lagerplatte 48 befestigt und ragen durch die offene Seite des Gehäuseprofils 20 in dieses hinein.

Der Antriebsabschnitt 64 des Drehblocks 60 der Welle 58 trägt an seinem freien unteren Ende einen Drehstern 88 mit vier sich von der Welle 58 nach radial außen und in senkrecht zur Wellenachse 74 erstreckenden Mitnehmerzungen 90a, 90b, 90c, 90d, die sich in Richtung von der Welle 58 weg symmetrisch verbreitern. Die nicht eigens gekennzeichnete Mittelachse der Mitnehmerzunge 90a verläuft senkrecht zur Längsfläche 78a des Drehblocks 60 der Welle 58. Die ebenfalls nicht eigens gekennzeichneten Mittelachsen der Mitnehmerzungen 90b, 90c und 90d verlaufen entsprechend senkrecht zu den Längsflächen 78b, 78c bzw. 78d des Drehblocks 60.

Die Mitnehmerzunge 90c ist als Positionserfassungszunge ausgebildet und weist hierzu an ihrem Außenrand eine mittige Einkerbung 92 auf und trägt auf ihrer von der Welle 58 abliegenden Seite einen Positionsklotz 94. Deren Lage kann in an und für sich bekannter Weise optisch oder mechanisch erfasst werden, woraus die Drehstellung der Welle 58 und damit die Stellung des Klemmkonus 72 hergeleitet werden kann.

Im Bereich zwischen dem Drehstern 88 und der Lagerplatte 48 trägt die Längsfläche 78b des Drehblocks 60 der Welle 58 ein Betätigungselement in Form eines Betätigungsstiftes 96, der sich senkrecht zur Längsfläche 78b erstreckt.

Dieser Betätigungsstift 96 arbeitet mit einer Arretiereinrichtung 98 und einer Freigabeeinrichtung 100 zusammen, welche auf der von dem Gehäuseprofil 20 abliegenden Unterseite der Lagerplatte 48 in deren Langlöchern 52 bzw. 54 gehalten sind.

Die Arretiereinrichtung 98 umfasst ein Federblech 102 mit einem Befestigungsende 104 und einem Arretierende 106. Am Befestigungsende 104 weist das Federblech 102 zwei parallel verlaufende Langlöcher 108a, 108b auf, die zu den Langlöchern 52a, 52b der Lagerplatte 48 komplementär sind. Das Federblech 102 ist so angeordnet, dass seine Langlöcher 108a, 108b die Langlöcher 52a, 52b der Lagerplatte 48 weitgehend deckungsgleich überlappen. Über ein zwischen dem Federblech 102 und der Lagerplatte 48 angeordnetes Distanzstück 110 ist das Federblech 102 mit der Lagerplatte 48 mittels nicht eigens mit Bezugzeichen versehener Schrauben verbunden.

Das Federblech 102 erstreckt sich so weit in Richtung des Drehblocks 60 der Welle 58, dass der Betätigungsstift 96 mit dem Arretierende 106 des Federblechs 102 in Kontakt kommen kann.

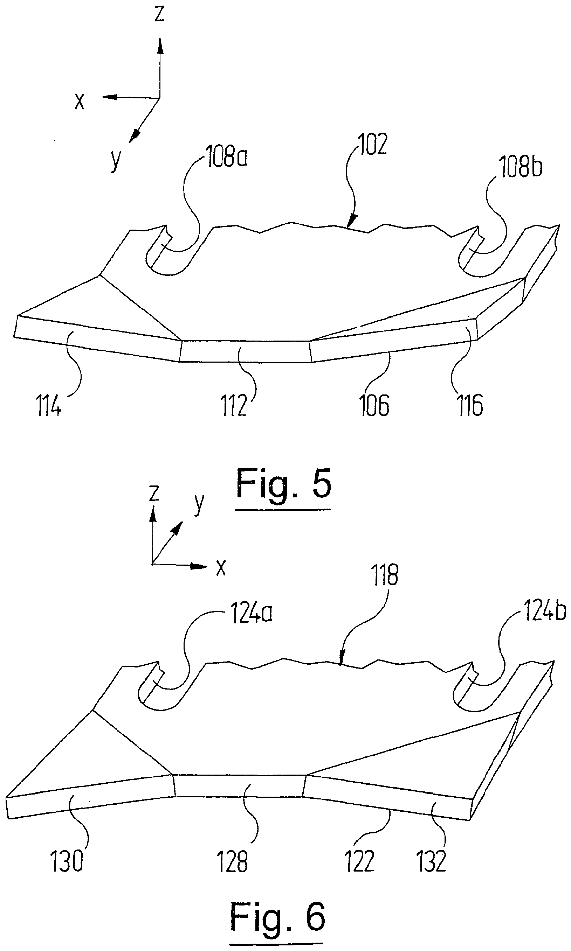

Das Arretierende 106 des Federblechs 102 weist einen mittleren Druckabschnitt 112, der parallel zur Lagerplatte 48 verläuft, und zwei Führungs-Eckabschnitte 114, 116 auf, die in Richtung nach oben auf die Lagerplatte 48 zu geneigt sind. Das Arretierende 106 des Federblechs 102 ist in Figur 5 nochmals in vergrößertem Maßstab gezeigt. Die Führungs-Eckabschnitte 114, 116 flankieren den Druckabschnitt 112 somit in Bewegungsrichtung des Betätigungsstiftes 96, was weiter unten noch erläutert wird.

Die Freigabeeinrichtung 100 umfasst eine starre Führungsplatte 118, welches im Aufbau dem Federblech 102 der Arretiereinrichtung 98 entspricht. Diese hat ein Befestigungsende 120 und ein Freigabeende 122. Zwei parallel verlaufende Langlöcher 124a, 124b am Befestigungsende 120 der Führungsplatte 118 sind zu den Langlöchern 54a, 54b der Lagerplatte 48 komplementär. Die Führungsplatte 118 ist so angeordnet, dass ihre Langlöcher 124a, 124b die Langlöcher 54a, 54b der Lagerplatte 48 weitgehend deckungsgleich überlappen. Die Führungsplatte 118 ist mit der Lagerplatte 48 mittels nicht eigens mit Bezugzeichen versehener Schrauben verbunden, wobei zwischen der Führungsplatte 118 und der Lagerplatte 48 ein Distanzstück 126 angeordnet ist.

Die Führungsplatte 118 erstreckt sich so weit in Richtung des Drehblocks 60 der Welle 58, dass der Betätigungsstift 96 mit dem Freigabeende 122 der Führungsplatte 118 in Kontakt kommen kann.

Das Freigabeende 122 der Führungsplatte 118 weist einen mittleren Halteabschnitt 128, der parallel zur Lagerplatte 48 verläuft, und zwei Führungs-Eckabschnitte 130, 132 auf, die in Richtung von der Lagerplatte 48 weg nach unten geneigt sind. Das Freigabeende 122 der Führungsplatte 102 ist in Figur 6 nochmals in vergrößertem Maßstab gezeigt. Die Führungs-Eckabschnitte 130, 132 flankieren den Druckabschnitt 112 somit entsprechend in Bewegungsrichtung des Betätigungsstiftes 96.

Die oben beschriebene Befestigungsvorrichtung 10 funktioniert wie folgt:
Der Skid 14 trägt an vier Positionen eine Befestigungsvorrichtung 10, wobei der Befestigungs- und Lösevorgang einer Fahrzeugkarosserie 12 an dem Skid 14 nachfolgend nur im Hinblick auf eine Befestigungsvorrichtung 10 erläutert wird.

Ausgehend von einem unbeladenen Skid 12 nimmt die Welle 58 in einer ersten Wellenstellung eine Drehstellung ein, in welcher die Positionserfassungszunge 90c des Drehsterns 88 nach vorne in y-Richtung weist. Im Vergleich zu der in den Figuren gezeigten Drehstellung der Welle 58 ist diese in ihrer ersten Wellenstellung somit um 180° verdreht.

In dieser ersten Wellenstellung der Welle 58 nimmt der Klemmkonus 78 eine Freigabestellung ein. In dieser fluchtet er radial mit dem Vorsprung 39 des Passteils 30 des Kontaktelements 28 und ist koaxial zu diesem angeordnet.

Der Betätigungsstift 96 ist zwischen der Lagerplatte 48 und dem Freigabeende 122 der Führungsplatte 118 der Freigebeeinrichtung 100 angeordnet und liegt mittig auf dessen Halteabschnitt 128 auf. Das Distanzstück 126 der Freigebeinrichtung 100 ist so dimensioniert, dass die Welle 58 in ihrer ersten Wellenstellung eine solche axiale Lage einnimmt, dass zwischen dem Klemmkonus 72 und dem Passteil 30 des Kontaktelements 28 ein Abstand verbleibt, was ebenfalls die Freigabestellung des Klemmkonus 72 definiert.

Nun wird eine Fahrzeugkarosserie 12 auf den Skid 14 aufgebracht, wobei der Klemmkonus 72 durch den Durchgang 36 im Koppelblech 34 der Fahrzeugkarosserie 12 geführt wird. Die konische Ausbildung des Klemmkonus 12 erleichtert dabei dessen Einführen in den Durchgang 36 der Fahrzeugkarosserie 12.

Die Fahrzeugkarosserie 12 liegt dann mit dem Koppelblech 34 auf dem Passteil 30 des Kontaktelements 28 auf, wobei der Vorsprung 39 des Passteils 30 von dem Kragen 38 des Koppelblechs 34 umgeben ist, wie es in Figur 4 zu erkennen ist.

In der Freigebestellung des Klemmkonus 72 verbleibt auch zwischen diesem und dem Kragen 38 des Koppelblechs 34 der Fahrzeugkarosserie 12 ein Abstand.

Nun wird der Skid 14 zusammen mit der noch nicht fixierten Fahrzeugkarosserie 12 mittels einer an und für sich bekannten Fördereinrichtung, wie z.B. einem Rollenbahnförderer, in einer Translationsbewegung in Transportrichtung 134 (siehe Figuren 1 bis 4 und 9) vorwärts gefördert. Entlang des Verfahrweges des Skids umfasst eine solche Fördereinrichtung an vorgegebenen Positionen hier nicht eigens gezeigte Umstellbolzen, mit welchen das Drehkreuz 88 der Befestigungseinrichtung 10 zusammenarbeiten kann.

Das Drehkreuz 88 stößt bei der Bewegung des Skids 14 mit seiner Mitnehmerzungen 90a, die in der ersten Wellenstellung der Welle 58 senkrecht zur Transportrichtung 135 steht, an einen solchen Bolzen an. Bei der weiteren Vorwärtsbewegung des Skids 14 wird die Welle 58 hierdurch aus ihrer ersten Wellenstellung um 90° in eine zweite Wellenstellung verdreht. Wie in den Figuren zu erkennen ist, soll die Transportrichtung 134 des Skids 14 beispielhaft in y-Richtung nach vorne weisen, so dass die Welle 58 aus Richtung des Klemmkonus 72 betrachtet dabei im Uhrzeigersinn verdreht wird.

Bei dieser Verdrehung der Welle 58 muss die Rückhaltekraft der Federstege 82 und 84 der Rückhalteeinrichtung 80 überwunden werden. Diese liegen in der ersten Wellenstellung der Welle 58 an den Längsflächen 78d bzw. 78b des Drehblocks 60 an und werden auf Grund des im wesentlichen quadratischen Querschnitts des Drehblocks 60 bei der Drehung der Welle 58 zunächst auseinander gebogen, was der Drehbewegung der Welle 58 einen gewissen Widerstand bietet. Wenn die Welle 58 ihre zweite Wellenstellung einnimmt, liegen die Federstege 82, 84 dann an den Längsflächen 78c bzw. 78a des Drehblocks 60 an, wodurch die Welle 58 in ihrer zweiten Wellenstellung gegen ein ungewolltes Verdrehen stabilisiert ist.

Die Rückhaltekraft der Federstege 82 und 84 der Rückhalteeinrichtung 80 muss bei jeder Verdrehung der Welle 58 um 90°, gleichwohl in welche Richtung, überwunden werden. Hierauf wird nachfolgend jedoch nicht mehr extra eingegangen.

Bei der Verdrehung der Welle 58 von der ersten Wellenstellung in die zweite Wellenstellung läuft der Betätigungsstift 96 von dem Halteabschnitt 128 der Führungsplatte 118 über deren Führungseckabschnitt 132 herunter, so dass der Klemmkonus 72 nicht mehr in seiner Freigabestellung gehalten ist. Der Betätigungsstift 96 weist in der zweiten Wellenstellung der Welle 58 nun nach rechts, also in x-Richtung.

In der zweiten Wellenstellung der Welle 58 nimmt der Klemmkonus 72 eine erste Zwischenstellung ein, in welcher seine Längsachse 76 in Transportrichtung 134 bzw. in y-Richtung gegenüber der Wellenachse 74 versetzt ist. In dieser Zwischenstellung fluchtet er nicht mehr mit dem Vorsprung 39 des Passteils 30 des Kontaktelements 28, sondern steht seitlich über diesen und den Kragen 38 des Koppelblechs 34 der Fahrzeugkarosserie 12 über.

Zwar ist die Fahrzeugkarosserie 12 schon durch den Klemmkonus 72 bereits in dessen erster Zwischenstellung gegen ein Lösen von der Befestigungsvorrichtung 10 in Richtung der Wellenachse 74 gesichert. Die Welle 58 hat jedoch noch einen gewissen Bewegungsspielraum in Richtung ihrer Längsachse 74, wodurch sich die Fahrzeugkarosserie 12 gegebenenfalls etwas von dem Passteil 30 lösen kann, was insbesondere zu einem unerwünschten schlechteren Kontakt zwischen der Fahrzeugkarosserie 12 und dem Kontaktelement 28 führt. Grob gesprochen schlackert die Fahrzeugkarosserie 12 an der Befestigungsvorrichtung 10.

Um die Fahrzeugkarosserie 12 nun endgültig an der Befestigungsvorrichtung 10 zu fixieren, wird der Klemmkonus 72 in eine Arretierstellung gebracht. Hierzu ist ein zweiter Umstellbolzen im Verfahrweg des Skids 14 vorgesehen, der dafür sorgt, dass des Drehkreuz 88 und damit die Welle 58 bei der weiteren Bewegung des Skids 14 in die Transportrichtung 134 aus ihrer zweiten Wellenstellung um weitere 90° im Uhrzeigersinn in eine dritte Wellenstellung verdreht wird, in der der Klemmkonus 72 seine Arretierstellung einnimmt.

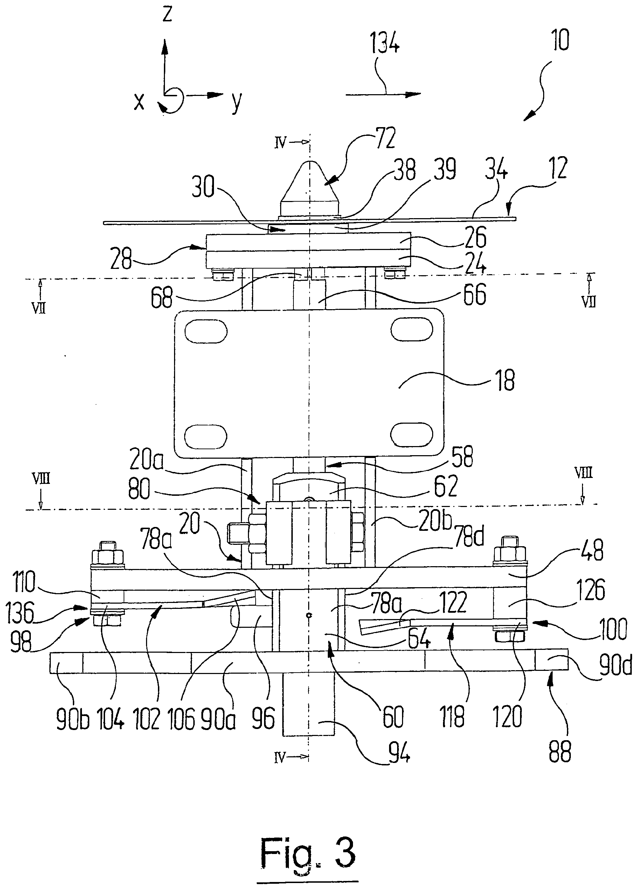

Das Distanzstück 110 der Arretiereinrichtung 98 ist so dimensioniert, dass der Betätigungsstift 96 bei dieser Verdrehung der Welle 58 von ihrer zweiten Wellenstellung in die dritte Wellenstellung zunächst gegen die von der Lagerplatte 48 abliegende untere Fläche des Führungseckabschnitt 114 des Federblechs 102 anstößt. Wie besonders in Figur 3 gut zu erkennen ist, ist das Distanzstück 110 der Arretiereinrichtung 98 hierzu dünner als das Distanzstück 126 der Freigabeeinrichtung 100.

Bei der weiteren Drehung der Welle 58 muss nun der der Betätigungsstift 96 gegen die Federkraft des Federblechs 102 arbeiten, bis er schließlich, wenn die Welle 58 ihre dritte Wellenstellung innehat, auf der von der Lagerplatte 48 abliegenden Seite an den Druckabschnitt 112 des Federblechs 102 anliegt. Der Betätigungsstift 96 weist in der dritten Wellenstellung der Welle 58 nach hinten, also in zur y-Richtung bzw. Transportrichtung 134 entgegengesetzte Richtung. Dies ist die in den Figuren gezeigte Stellung.

Das Federblech 102 ist nun etwas nach oben gebogen und drückt derart gegen den Betätigungsstift 96, dass die Welle 58 und damit auch der Klemmkonus 72 in Richtung von der Fahrzeugkarosserie 12 weg vorgespannt ist. Die Welle 58 wird somit durch das Federblech 102 in zur z-Richtung entgegengesetzte Richtung nach unten gedrückt.

Anders ausgedrückt bildet das Federblech 102 in Verbindung mit dem Distanzstück 110 eine Vorspanneinrichtung 136, welche den Klemmkonus 72 in der Arretierstellung unter Vorspannung gegen das Koppelblech 34 der Fahrzeugkarosserie 12 in Richtung auf das Kontaktelement 28 drückt. Das Kontaktelement 28 mit dem Passteil 30 dient somit als Konterelement für den Klemmkonus 72. Das als Haltebauteil der Fahrzeugkarosserie 12 dienenden Koppelblech 34 ist zwischen dem Klemmkonus 72 und dem Kontaktelement 28 arretiert.

Aufgrund des Federblechs 102 ist es zwar noch immer möglich, dass sich die Welle 58 und damit der Klemmkonus 72 in z-Richtung bewegt; hierzu muss jedoch die Federkraft des Federblechs 102 überwunden werden. Der Bewegungsspielraum in z-Richtung nach oben ist dadurch begrenzt, dass das Distanzstück 110 nach einem bestimmten Weg von unten gegen die Lagerplatte 48 stößt, so dass eine weitere Bewegung der Welle 58 nach oben unterbunden ist. Das Distanzstück 110 ist so dimensioniert, dass auch Überkopffahrten möglich sind, ohne dass der erforderliche Kontakt der Fahrzeugkarosserie 12 zum Kontaktelement 28 verloren geht.

Die effektive Federkraft des Federblechs 102 und damit die Stärke der Vorspannung kann durch eine entsprechende Positionierung des Distanzstücks 110 der Arretiereinrichtung 98 eingestellt werden. Je näher das Distanzstück 110 in Richtung auf die Welle 58 zu positioniert ist, desto stärker ist die wirksame Federkraft des Federblechs 102.

Wenn die Fahrzeugkarosserie 12 nun wieder von dem Skid 14 gelöst werden soll, wird der Skid 14 wiederum über zwei hintereinander im Verfahrweg des Skids 14 vorhandene Umstellbolzen geführt, die das Drehkreuz 88 aus Richtung des Klemmkonus 72 betrachtet im Uhrzeigersinn jeweils um 90° verdrehen.

Dabei wird der Betätigungsstift 96 zunächst von dem Druckabschnitt 112 des Federblechs 102 zu dessen in Figur 5 rechts zu erkennenden Führungseckabschnitt 116 bewegt und über diesen hinweg geführt. Hierbei wird die Vorspannung des Klemmkonus 72 gegen das Kontaktelement 28 aufgehoben und die Befestigung der Fahrzeugkarosserie 12 an dem Skid 14 ist gelockert.

Nach vollzogener 90°-Drehung nimmt die Welle eine vierte Wellenstellung und der Klemmkonus 72 eine zweite Zwischenstellung ein, in welchen der Betätigungsstift 96 nach links weist.

Da der Klemmkonus 72 jedoch immer noch über den Kragen 38 des Koppelblechs 34 der Fahrzeugkarosserie 12 übersteht und diese so sichert, kann die Fahrzeugkarosserie 12 noch nicht von der Befestigungsvorrichtung 10 und damit von dem Skid 14 getrennt werden.

Hierzu muss der Klemmkonus 72 erst noch in seine Freigabestellung gebracht werden, wozu die Welle 58 noch einmal aus Richtung des Klemmkonus 72 betrachtet im Uhrzeigersinn verdreht wird.

Hierbei stößt der Betätigungsstift 96 zunächst gegen die der Lagerplatte 48 zugewandte Fläche des Führungseckabschnitts 130 der Führungsplatte 118 an und muss bei der weiteren Drehung der Welle 58 dem Oberflächenverlauf des Freigabeendes 122 der Führungsplatte 118 folgen. Hierbei wird die Welle 58 in z-Richtung nach oben bewegt, bis der Betätigungsstift 96 zwischen der Lagerplatte 48 und der Führungsplatte 118 auf deren Halteabschnitt 128 zu liegen kommt. Nach vollzogener 90°-Drehung nimmt die Welle 58 wieder ihre oben erläuterte erste Wellenstellung und der Klemmkonus 72 seine Freigabestellung ein.

Nun kann die Fahrzeugkarosserie 12 in z-Richtung von der Befestigungsvorrichtung 10 und damit von dem Skid 14 abgenommen werden.

Zwischen ihrer ersten Wellenstellung, in der der Klemmkonus 72 seine Freigabestellung innehat, und ihrer dritten Wellstellung, in der der Klemmkonus 72 seine Arretierstellung einnimmt, bewegt sich die Welle 58 etwa 3 mm bis 7 mm in ihrer in Längsrichtung. In der Praxis hat sich ein Wellenhub von etwa 5 mm bewährt.

Das Aufbringen der Fahrzeugkarosserie 12 auf den Skid 14 und deren Befestigung ebenso wie das Lösen und Herunternehmen der Fahrzeugkarosserie 12 von dem Skid 14 kann auf Grund der oben erläuterten Ausbildung der Befestigungsvorrichtung 10 während der Bewegung des Skids 14 erfolgen. Durch die Vorspanneinrichtung 136 wird der Verbindung zwischen den beteiligten Bauteilen der Befestigungsvorrichtung 10 einerseits und der Fahrzeigkarosserie 12 andererseits sowie deren Materialkontakt auch bei unterschiedlichen Fertigungstoleranzen bei verschiedenen Fahrzeugkarosserien 12 sicher ausgebildet und aufrechterhalten, ohne dass hierzu eine manuelle Justierung oder auch eine Nachjustierung nötig ist.

## Patentansprüche

1. Vorrichtung zum lösbaren Befestigen einer Fahrzeugkarosserie (12), an einer Tragstruktur (14), insbesondere einem Skid, mit
a) einem Befestigungselement (72), welches zwischen einer Freigabestellung und einer Arretierstellung bewegbar ist, wobei das Befestigungselement (72) exzentrisch an einem Ende (70) einer Welle (58) getragen ist;
b) einem Konterelement (28);
wobei
c) die Fahrzeugkarosserie (12) über ein dieser zugeordnetes Haltebauteil (34) zwischen dem Befestigungselement (72) in der Arretierstellung und dem Konterelement (28) arretierbar ist,
**dadurch gekennzeichnet, dass**
d) das Befestigungselement (72) in der Arretierstellung auf das Konterelement (28) zu und von diesem weg bewegbar ist;
e) das Befestigungselement (72) in der Arretierstellung mittels einer Vorspanneinrichtung (136) unter Vorspannung gegen das Haltebauteil (34) der Fahrzeugkarosserie (12) in Richtung auf das Konterelement (28) drückbar ist;
f) die Welle (58) radial außen ein Betätigungselement (96) trägt, welches mit einem Federelement (102) der Vorspanneinrichtung (136) zusammenarbeitet.

2. Vorrichtung nach Anspruch 1, **dadurch gekennzeichnet, dass** die auf das Befestigungselement (72) in der Arretierstellung wirkende Vorspannung einstellbar ist.

3. Vorrichtung nach Anspruch 1 oder 2, **dadurch gekennzeichnet, dass** das Befestigungselement (72) derart geführt ist, dass es bei einer Bewegung von der Freigabestellung in die Arretierstellung in Richtung auf das Konterelement (28) zu und bei einer Bewegung zwischen der Arretierstellung und der Freigabestellung in Richtung von dem Konterelement (28) weg bewegt wird.

4. Vorrichtung nach einem der Ansprüche 1 bis 3, **dadurch gekennzeichnet, dass** das Federelement (102) ein Federblech (102) ist.

5. Vorrichtung nach Anspruch 4, **dadurch gekennzeichnet, dass** das Federelement (102) wenigstens einen Führungsabschnitt (114, 116) und einen Druckabschnitt (112) umfasst, so dass das Betätigungselement (96) durch eine Bewegung über den Führungsabschnitt (114, 116) zum Druckabschnitt (112) führbar ist, gegen welchen es anliegt, wenn das Befestigungselement (72) die Arretierstellung einnimmt.

6. Vorrichtung nach einem der Ansprüche 1 bis 5, **dadurch gekennzeichnet, dass** das Betätigungselement (96) der Welle (58) mit einem Führungselement (118) einer Freigabeeinrichtung (100) zusammenarbeitet.

7. Vorrichtung nach Anspruch 6, **dadurch gekennzeichnet, dass** das Führungselement (118) eine Führungsplatte (118) ist.

8. Vorrichtung nach Anspruch 7, **dadurch gekennzeichnet, dass** das Führungselement (102) wenigstens einen Führungsabschnitt (130, 132) und einen Halteabschnitt (128) umfasst, so dass das Betätigungselement (96) durch eine Bewegung über den Führungsabschnitt (130, 132) zum Halteabschnitt (128) führbar ist, gegen welchen es anliegt, wenn das Befestigungselement (72) die Freigabestellung einnimmt.

9. Vorrichtung nach einem der Ansprüche 1 bis 8, **dadurch gekennzeichnet, dass** die Welle (58) an ihrem zweiten Ende eine Mitnehmereinheit (88) trägt, durch welche die Welle (58) mechanisch mittels eines Umstellelements verdrehbar ist.

10. Skid zum Transportieren von Fahrzeugkarosserien (12), **dadurch gekennzeichnet, dass** der Skid (14) eine Befestigungseinrichtung (10) nach einem der Ansprüche 1 bis 9 umfasst.

## Claims

1. Device for the releasable fastening of a vehicle body (12) to a supporting structure (14), in particular to a skid, having
a) a fastening element (72), which is movable between a release position and a locking position, wherein the fastening element (72) is supported eccentrically at one end (70) of a shaft (58);
b) a counter element (28);
wherein
c) the vehicle body (12) is lockable via a holding component (34) assigned thereto between the fastening element (72) in the locking position and the counter element (28),
**characterized in that**
d) the fastening element (72) in the locking position is movable towards the counter element (28) and away from the latter;
e) the fastening element (72) in the locking position can be pressed against the holding component (34) of the vehicle body (12) in the direction of the counter element (28) under prestress by means of a prestressing device (136) ;
f) the shaft (58) supports an actuating element (96) radially on the outside, said actuating element interacting with a spring element (102) of the prestressing device (136).

2. Device according to Claim 1, **characterized in that** the prestress acting on the fastening element (72) in the locking position is adjustable.

3. Device according to Claim 1 or 2, **characterized in that** the fastening element (72) is guided in such a manner that it is moved in the direction of the counter element (28) during a movement from the release position into the locking position and is moved in a direction away from the counter element (28) during a movement between the locking position and the release position.

4. Device according to one of Claims 1 to 3, **characterized in that** the spring element (102) is a spring plate (102).

5. Device according to Claim 4, **characterized in that** the spring element (102) comprises at least one guide portion (114, 116) and a pressure portion (112), and therefore the actuating element (96) can be guided by a movement via the guide portion (114, 116) to the pressure portion (112), against which it lies when the fastening element (72) takes up the locking position.

6. Device according to one of Claims 1 to 5, **characterized in that** the actuating element (96) of the shaft (58) cooperates with a guide element (118) of a release device (100).

7. Device according to Claim 6, **characterized in that** the guide element (118) is a guide plate (118).

8. Device according to Claim 7, **characterized in that** the guide element (102) comprises at least one guide portion (130, 132) and a holding portion (128), and therefore the actuating element (96) can be guided by a movement via the guide portion (130, 132) to the holding portion (128), against which it lies when the fastening element (72) takes up the release position.

9. Device according to one of Claims 1 to 8, **characterized in that** the second end of the shaft (58) bears a driver unit (88), by means of which the shaft (58) can be rotated mechanically by means of an adjustment element.

10. Skid for transporting vehicle bodies (12), **characterized in that** the skid (14) comprises a fastening device (10) according to one of Claims 1 to 9.

## Revendications

1. Dispositif pour la fixation amovible d'une carrosserie de véhicule (12), à une structure porteuse (14), notamment une plate-forme, avec
a) un élément de fixation (72) qui peut être déplacé entre une position de libération et une position de blocage, dans lequel l'élément de fixation (72) est porté de manière excentrique à une extrémité (70) d'un arbre (58) ;
b) un contre-élément (28) ;
dans lequel
c) la carrosserie de véhicule (12) peut être bloquée par le biais d'un composant de maintien associé à celle-ci (34) entre l'élément de fixation (72) dans la position de blocage et le contre-élément (28),
**caractérisé en ce que**
d) l'élément de fixation (72) peut être déplacé dans la position de blocage vers le contre-élément (28) et à l'écart de celui-ci ;
e) l'élément de fixation (72) peut être poussé dans la position de blocage au moyen d'une installation de précontrainte (136) avec précontrainte contre le composant de maintien (34) de la carrosserie de véhicule (12) en direction du contre-élément (28) ;
f) l'arbre (58) porte un élément d'actionnement (96) radialement à l'extérieur qui coopère avec un élément de ressort (102) de l'installation de précontrainte (136).

2. Dispositif selon la revendication 1, **caractérisé en ce que** la précontrainte agissant sur l'élément de fixation (72) dans la position de blocage est réglable.

3. Dispositif selon la revendication 1 ou 2, **caractérisé en ce que** l'élément de fixation (72) est guidé de telle sorte qu'il est déplacé lors d'un mouvement de la position de libération dans la position de blocage en direction du contre-élément (28) et lors d'un mouvement entre la position de blocage et la position de libération en direction à l'écart du contre-élément (28).

4. Dispositif selon une des revendications 1 à 3, **caractérisé en ce que** l'élément de ressort (102) est une tôle élastique à ressorts (102).

5. Dispositif selon la revendication 4, **caractérisé en ce que** l'élément de ressort (102) comprend au moins une section de guidage (114, 116) et une section de pression (112) de sorte que l'élément d'actionnement (96) peut être guidé par un mouvement au-dessus de la section de guidage (114, 116) vers la section de pression (112) contre laquelle il repose lorsque l'élément de fixation (72) adopte la position de blocage.

6. Dispositif selon une des revendications 1 à 5, **caractérisé en ce que** l'élément d'actionnement (96) de l'arbre (58) coopère avec un élément de guidage (118) d'une installation de libération (100).

7. Dispositif selon la revendication 6, **caractérisé en ce que** l'élément de guidage (118) est une plaque de guidage (118).

8. Dispositif selon la revendication 7, **caractérisé en ce que** l'élément de guidage (102) comprend au moins une section de guidage (130, 132) et une section de maintien (128) de sorte que l'élément d'actionnement (96) peut être guidé par un mouvement au-dessus de la section de guidage (130, 132) vers la section de maintien (128) contre laquelle il repose lorsque l'élément de fixation (72) adopte la position de libération.

9. Dispositif selon une des revendications 1 à 8, **caractérisé en ce que** l'arbre (58) porte à sa seconde extrémité une unité d'entraînement (88) par laquelle l'arbre (58) peut être tordu mécaniquement au moyen d'un élément de manoeuvre.

10. Plate-forme pour le transport de carrosseries de véhicule (12), **caractérisée en ce que** la plate-forme (14) comprend un dispositif de fixation (10) selon une des revendications 1 à 9.
